# EUROPÄISCHE PATENTSCHRIFT

(11) **EP 1 293 290 B1**
(45) Veröffentlichungstag und Bekanntmachung des Hinweises auf die Patenterteilung: **08.06.2005**
(21) Anmeldenummer: 02020842.7
(22) Anmeldetag: 18.09.2002
(51) Int. Cl.: B23Q 11/00, B23Q 1/01, B08B 15/04, B23Q 11/08

(54) **Vorrichtung zum Bearbeiten eines Werkstücks mit Abfuhr von Bearbeitungsrückständen**
Apparatus for machining a workpiece with removal of scrap material
Dispositif pour usiner une pièce avec enlèvement de copeaux

(30) Priorität: 18.09.2001 DE 10145921
(43) Veröffentlichungstag der Anmeldung: 19.03.2003
(73) Patentinhaber: ROBERT BOSCH GMBH, 70442 Stuttgart (DE); FORD-WERKE AKTIENGESELLSCHAFT, 50725 Köln (DE); Bayerische Motoren Werke Aktiengesellschaft, 80788 München (DE)
(72) Erfinder: Hockauf, Wolfgang, 71546 Aspach-Rietenau (DE); Girgius, Mike Roger, 38442 Wolfsburg (DE); Stoll, Alexander, 51467 Bergisch-Gladbach (DE); Steibl, Josef, 85716 Unterschleissheim (DE); Schillo, Eckart, 85540 Haar (DE); Schirsch, Reinhard, 70734 Fellbach (DE); Zielasko, Waldemar, 73230 Kirchheim (DE)

(56) Entgegenhaltungen:
- DE-A- 19 734 628
- DE-A- 19 734 631
- DE-U- 29 900 106

## Beschreibung

Die Erfindung betrifft eine Vorrichtung zum Bearbeiten eines Werkstücks mit einem in einem Arbeitsraum angeordneten Bearbeitungszentrum, in dem das Werkstück mittels eines Werkzeugs bearbeitet wird, wobei der Arbeitsraum mit einem Gasstrom zum Entfernen von Bearbeitungsrückständen durchströmbar ausgeführt und mit einer ersten Querschnittsfläche und einer zweiten Querschnittsfläche ausgestattet ist, die kleiner als die erste Querschnittsfläche ausgebildet und in Strömungsrichtung des Gasstromes hinter der ersten Querschnittsfläche angeordnet ist, wie sie aus der offenlegungsschrift DE 19 734 628 A1 bekannt ist.

Eine Vorrichtung der genannten Art ist auch aus der DE 44 39 114 A1 bekannt. Eine Werkzeugmaschine zur trockenen spanabhebenden Bearbeitung eines Werkstücks hat eine durch ein Schottblech abgeteilte Teilkammer, in der das Werkstück bearbeitet wird. Entstehende Späne werden durch Zuführen von Gas in diese Kammer oder durch Abführen von Gas aus der Kammer entfernt. Das Schottblech verjüngt sich nach unten hin, so daß der Druckgradient innerhalb der Teilkammer derart beeinflußt wird, daß eine ordnungsgemäße Abfuhr von Spänen durch die in diesem Bereich angeordnete Absaugöffnung erfolgen kann. Späne, die direkt bei der Zerspanung im Bereich Werkstück/Werkzeug entstehen, werden von dieser Strömung jedoch nicht erfaßt.

Die DE 197 34 631 A1 offenbart eine Vorrichtung zum Reinigen von Bearbeitungsrückständen, unter Verwendung von Reinigungsluft. In einen sich verengenden Arbeitsraum wird ein zu reinigendes Werkstück eingebracht, wobei durch einen den Arbeitsraum durchströmenden Saugluftstrom, dessen Strömungsgeschwindigkeit innerhalb des Arbeitsraumes zunimmt, Verunreinigungen vom Werkstück abgesaugt werden. Zur Abfuhr von groben, schweren Spänen wäre eine extreme Verengung des Arbeitsraumes oder eine großzügig dimensionierte Absaugeinrichtung notwendig. Die bei der Bearbeitung der Werkstücke entstehenden Bearbeitungsrückstände können durch diesen Luftstrom nicht entfernt werden, da die Bearbeitung in einer anderen Maschine bzw. in einem getrennten Gehäuseraum stattfindet, was einen erheblichen Bedarf an unterschiedlichen Maschinen nach sich zieht.

In der DE 197 34 628 A1 wird ein Verfahren zum Beseitigen von Bearbeitungsrückständen beschrieben, bei dem das Bearbeitungszentrum eines Werkstücks in einem dicht gekapselten Arbeitsraum mit einem gebündelt geführten Saugluftstrom gekreuzt wird. Der Arbeitsraum beinhaltet die gesamte Werkzeugmaschine und ist deshalb von erheblicher Größe. Um die Bearbeitungsrückstände ordnungsgemäß entfernen zu können, ist eine entsprechende Saugleistung und damit verbunden, großzügig dimensionierte Saugeinrichtungen notwendig.

In der DE 40 02 568 A1 wird ebenfalls ein Verfahren zum Abtransport von Bearbeitungsrückständen aus einem Bearbeitungsraum beschrieben. Die Bearbeitungsrückstände werden aus dem Ablagerungsbereich heraus- und einem Saugluftstrom zugeblasen. Im Ablagerungsbereich wird durch einen Unterdruck im Arbeitsraum ein exakt zu definierender Saugluftstrom ausgebildet. Dieses Verfahren ist sehr aufwendig, da ein Arbeitsraum, in dem die Bearbeitungsmaschine selbst angeordnet ist, entlüftet werden muß.

Aus der DE 196 51 662 A1 ist eine weitere Vorrichtung zum Absaugen von Bearbeitungsrückständen bekannt. Um den Bearbeitungsbereich effizient von Bearbeitungsrückständen freizuhalten, wird die abgesaugte Luft vom Saugaggregat über eine Rückführleitung einer in dem Bearbeitungsbereich angeordneten Düse zugeführt. Diese Vorrichtung ist sehr aufwendig.

In der DE 42 18 247 A1 wird eine Vorrichtung beschrieben, bei der ein Abtragauffanggehäuse für bei der Bearbeitung entstehende Späne direkt am Werkzeug bzw. an der Spindel befestigt ist. Dabei werden allerdings nicht alle entstehenden Späne aufgefangen. Für unterschiedliche Werkzeuge werden außerdem unterschiedliche Auffanggehäuse benötigt.

In der EP 51 06 37 B1 und der WO 93/16 334 A1 wird ein Arbeitsraum beschrieben, bei dem durch einen zirkulierenden Luftstrom ein Luftvorhang vor einer Arbeitsraumöffnung entsteht und dadurch der Eintritt von Umgebungsluft in den Arbeitsraum verhindert wird. Bei dem Verfahren wird nicht erwähnt, ob oder in welcher Art und Weise Bearbeitungsrückstände entfernt werden.

Vor diesem Hintergrund liegt der Erfindung die Aufgabe zugrunde, eine Vorrichtung der eingangs genannten Art zu schaffen, durch welche die Abfuhr von Bearbeitungsrückständen aus dem Arbeitsraum wesentlich verbessert wird, ohne daß die Leistung der den Gasstrom erzeugenden Einrichtungen erhöht werden muß.

Diese Aufgabe wird gelöst mit einer Vorrichtung gemäß den Merkmalen des Patentanspruchs 1. Die Unteransprüche betreffen besonders zweckmäßige Weiterbildungen der Erfindung.

Erfindungsgemäß ist also eine Vorrichtung zum Bearbeiten eines Werkstücks vorgesehen, bei welcher der Arbeitsraum in Strömungsrichtung des Gasstroms eine hinter der zweiten Querschnittsfläche angeordnete und gegenüber dieser vergrößerte dritte Querschnittsfläche aufweist und daß das Bearbeitungszentrum hinter einer engsten Querschnittsfläche des Arbeitsraumes angeordnet ist. Durch die Ausbildung des Arbeitsraumes in Form einer Laval-Düse, wird die Gasströmung innerhalb des Arbeitsraumes zunächst kontinuierlich beschleunigt und zwar bis kurz hinter den engsten Querschnitt. Hier befindet sich das Geschwindigkeitsmaximum der Gasströmung. In diesem Bereich ist das Bearbeitungszentrum angeordnet. Die hier entstehenden Bearbeitungsrückstände, beispielsweise Werkstückpartikel oder flüssige Kühlschmiermittel, werden der größten Strömungsgeschwindigkeit des Gasstroms ausgesetzt, so daß eine, im Vergleich zur Einströmungsgeschwindigkeit, höhere kinetische Energie auf die Bearbeitungsrückstände übertragen werden kann. Dadurch wird die Abfuhr der Bearbeitungsrückstände wesentlich vereinfacht und verbessert. Die Strömungsgeschwindigkeit des Gasstromes wird, ohne Veränderung der Leistung der den Gasstrom erzeugenden Einrichtungen, positiv beeinflußt. Da das Bearbeitungszentrum in dem Bereich angeordnet ist, wo der Arbeitsraum sich wieder vergrößert, besteht ausreichend Platz für das Werkstück und weitere Teile der Vorrichtung, wie z. B. einen Maschinentisch. Der für die Abfuhr von Bearbeitungsrückständen in den Arbeitsraum eingeführte Gasstrom kann außerdem zur Kühlung des Werkzeugs bzw. des Werkstücks genutzt werden.

Eine besonders vorteilhafte Ausführungsform der Erfindung wird dadurch erreicht, daß der Arbeitsraum mit einem Mittel versehen ist, dessen Formgebung eine Rotation des Gasstromes um seine Strömungsachse bewirkt. Hierdurch wird der Gasstrom in einen Drall versetzt. Die Bearbeitungsrückstände werden unter dem Einfluß der auftretenden Zentrifugalkräfte radial nach außen, von der Zerspanstelle weg, abgeführt.

Eine besonders einfache Ausgestaltung wird dadurch geschaffen, daß das Mittel ein Strömungsleitelement hat. Dabei wird das Strömungsleitelement im Bereich eines Randabschnittes des Arbeitsraumes fixiert.

Eine weitere besonders vorteilhafte Abwandlung wird dadurch geschaffen, daß der Arbeitsraum eine Arbeitsraumwand aufweist, mit einer Formgebung, die den Gasstrom in Rotation um seine Strömungsachse versetzt, um auf diese Weise die Abfuhr der Bearbeitungsrückstände weiter zu optimieren. Hierbei kann es sich beispielsweise um spiralförmig ausgebildete Nuten in der Arbeitsraumwand handeln. Diese Formgebung ist einstückig mit der Arbeitsraumwand hergestellt. Es müssen keine zusätzlichen Bauteile im Arbeitsraum angeordnet oder an der Arbeitsraumwand befestigt werden.

Eine andere zweckmäßige Weiterbildung der Vorrichtung wird dadurch erreicht, daß der Arbeitsraum eine Zuführeinrichtung oder eine Abführeinrichtung zum Zuführen oder zum Abführen eines Gases aufweist, wobei das Gas zumindest teilweise tangential in oder aus dem Arbeitsraum zuführbar oder abführbar ist und dadurch der Gasstrom in Rotation um seine Strömungsachse versetzbar ist. Die Strömungsgeschwindigkeit des Gasstromes wird hierbei nicht durch Leitelemente oder Formgebungen in der Arbeitsraumwand gemindert.

Als besonders praxisnah erweist es sich zudem, wenn der Zuführeinrichtung oder der Abführeinrichtung ein Filterelement zugeordnet ist. Hierdurch wird das Eindringen unerwünschter Umgebungseinflüsse, beispielsweise Staubpartikel, zusammen mit dem Gasstrom wirkungsvoll vermieden. Im Bereich der Abführeinrichtung können die Bearbeitungsrückstände aufgefangen und entsorgt werden.

Dabei hat sich zudem eine Abwandlung der erfindungsgemäßen Vorrichtung als besonders wirkungsvoll erwiesen, bei welcher der Arbeitsraum im wesentlichen entsprechend einer Laval-Düse geformt ist. Hierdurch herrschen im Bereich unterschiedlicher Querschnittsflächen exakt vorherbestimmbare Strömungsbedingungen, die für die Bearbeitung des Werkstückes in optimaler Weise nutzbar sind.

Hierzu kann nach einer weiteren besonders günstigen Ausgestaltung der Erfindung die Position des Bearbeitungszentrums in dem Arbeitsraum einstellbar sein. Die Position kann hierzu beispielsweise der fortschreitenden Bearbeitung des Werkstückes nachgeführt werden, so daß der Bereich des Werkzeugeingriffs konstant im Bereich der höchsten Strömungsgeschwindigkeit gehalten wird.

Als besonders praxisnah hat es sich auch erwiesen, wenn der Arbeitsraum zumindest abschnittsweise transparent ausgeführt ist, um so eine visuelle Kontrolle des Bearbeitungsprozesses durch den Bediener zu ermöglichen.

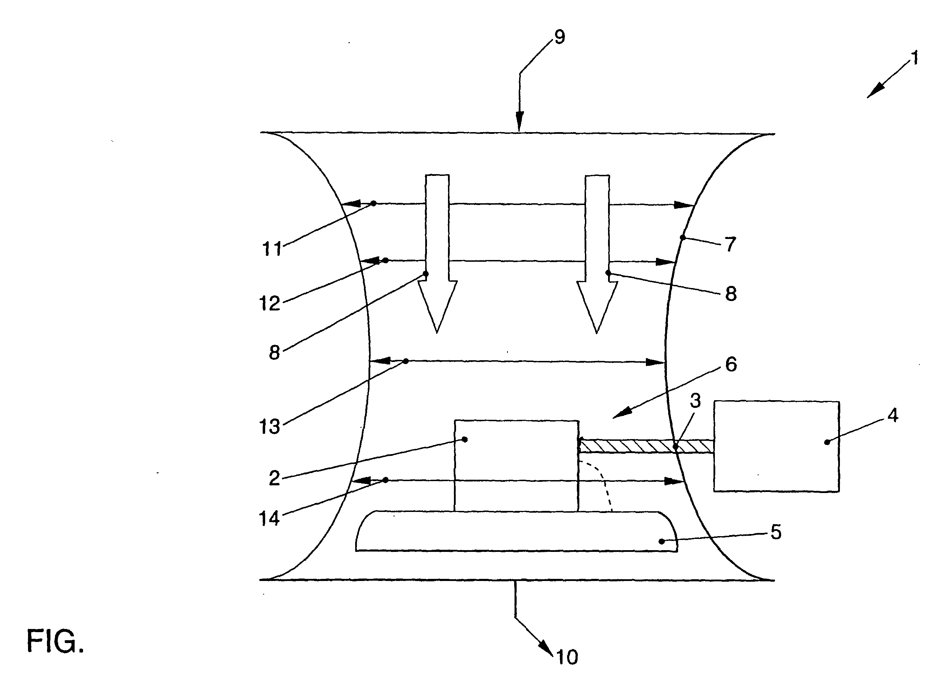

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt eine Vorrichtung 1 zum Bearbeiten eines Werkstücks 2 mit einem Werkzeug 3, welches durch eine Spindel 4 angetrieben wird. Die Vorrichtung 1 ist mit einem Maschinentisch 5 ausgestattet, auf dem das Werkstück 2 angeordnet ist. Die Bearbeitung des Werkstücks 2 mit dem Werkzeug 3 erfolgt in einem Bearbeitungszentrum 6, das Bestandteil eines Arbeitsraumes 7 ist. Ein Gasstrom 8, der in der Zeichnung durch einen Pfeil dargestellt ist, entfernt die bei der Bearbeitung des Werkstücks 2 entstehenden Bearbeitungsrückstände, wie z. B. Späne oder Stäube, aus dem Arbeitsraum 7. Der Gasstrom 8 kann durch ein nicht dargestelltes Gebläse oder durch eine nicht dargestellte Absauganlage erzeugt werden, die über eine Zuführeinrichtung 9 oder eine Abführeinrichtung 10 mit dem Arbeitsraum 7 in Verbindung stehen. Der Arbeitsraum 7 ist ähnlich einer Laval-Düse ausgebildet. In Strömungsrichtung des Gasstroms 8 gesehen, verengt sich der Arbeitsraum 7 zunächst von einer ersten Querschnittsfläche 11 über eine zweite Querschnittsfläche 12 in eine engste Querschnittfläche 13 und vergrößert sich danach wieder in eine dritte Querschnittsfläche 14. Durch diese Ausgestaltung des Arbeitsraumes 7 wird der durch die Zuführeinrichtung 9 eingebrachte Gasstrom 8 zunächst kontinuierlich beschleunigt bis kurz hinter die engste Querschnittsfläche 13, hinter der das Maximum der Strömungsgeschwindigkeit des Gasstroms 8 erreicht wird. Im weiteren Verlauf vergrößert sich die Querschnittsfläche des Arbeitsraumes 7 und die Strömungsgeschwindigkeit wird kleiner. Das Bearbeitungszentrum 6 ist hierbei im Bereich der höchsten Strömungsgeschwindigkeit angeordnet. Die im Bearbeitungszentrum 6 entstehenden Bearbeitungsrückstände werden somit der höchsten Strömungsgeschwindigkeit des Gasstroms 8 ausgesetzt, so daß die Entfernung der Bearbeitungsrückstände ohne eine Veränderung des zu- bzw. abgeführten Gasstromes 8 wesentlich verbessert werden kann. Zudem ist in diesem Bereich die Querschnittsfläche des Arbeitsraumes erweitert, so daß ein ausreichendes Platzangebot für die Anordnung des Maschinentisches und des Werkzeugs vorhanden ist.

### BEZUGSZEICHENLISTE

- 1: Vorrichtung
- 2: Werkstück
- 3: Werkzeug
- 4: Spindel
- 5: Maschinentisch

- 6: Bearbeitungszentrum
- 7: Arbeitsraum
- 8: Gasstrom
- 9: Zuführeinrichtung
- 10: Abführeinrichtung

- 11: erste Querschnittsfläche
- 12: zweite Querschnittsfläche
- 13: engste Querschnittsfläche
- 14: dritte Querschnittsfläche

## Patentansprüche

1. Vorrichtung (1) zum Bearbeiten eines Werkstücks (2) mit einem in einem Arbeitsraum (7) angeordneten Bearbeitungszentrum (6), in dem das Werkstück (2) mittels eines Werkzeugs (3) bearbeitet wird, wobei der Arbeitsraum (7) mit einem Gasstrom (8) zum Entfernen von Bearbeitungsrückständen durchströmbar ausgeführt und mit einer ersten Querschnittsfläche (11) und einer zweiten Querschnittsfläche (12) ausgestattet ist, die kleiner als die erste Querschnittsfläche (11) ausgebildet und in Strömungsrichtung des Gasstromes (8) hinter der ersten Querschnittsfläche (11) angeordnet ist, **dadurch gekennzeichnet, daß** der Arbeitsraum (7) in Strömungsrichtung des Gasstroms (8) eine hinter der zweiten Querschnittsfläche (12) angeordnete und gegenüber dieser vergrößerte dritte Querschnittsfläche (14) aufweist und daß das Bearbeitungszentrum (6) hinter einer engsten Querschnittsfläche (13) des Arbeitsraumes (7) angeordnet ist.

2. Vorrichtung nach Anspruch 1, **dadurch gekennzeichnet, daß** der Arbeitsraum mit einem Mittel versehen ist, dessen Formgebung eine Rotation des Gasstromes um seine Strömungsachse bewirkt.

3. Vorrichtung nach Anspruch 2, **dadurch gekennzeichnet, daß** das Mittel ein Strömungsleitelement hat.

4. Vorrichtung nach zumindest einem der vorangehenden Ansprüche, **dadurch gekennzeichnet, daß** der Arbeitsraum (7) eine Arbeitsraumwand aufweist, mit einer Formgebung, die den Gasstrom (8) in Rotation um seine Strömungsachse versetzt.

5. Vorrichtung nach zumindest einem der vorangehenden Ansprüche, **dadurch gekennzeichnet, daß** der Arbeitsraum eine Zuführeinrichtung (9) oder eine Abführeinrichtung (10) zum Zuführen oder zum Abführen eines Gases aufweist, wobei das Gas zumindest teilweise tangential in oder aus dem Arbeitsraum zuführbar oder abführbar ist und dadurch der Gasstrom (8) in Rotation um seine Strömungsachse versetzbar ist.

6. Vorrichtung nach Anspruch 5, **dadurch gekennzeichnet, daß** der Zuführeinrichtung (9) oder der Abführeinrichtung (10) ein Filterelement zugeordnet ist.

7. Vorrichtung nach zumindest einem der vorangehenden Ansprüche, **dadurch gekennzeichnet, daß** der Arbeitsraum (7) im wesentlichen entsprechend einer Laval-Düse geformt ist.

8. Vorrichtung nach zumindest einem der vorangehenden Ansprüche, **dadurch gekennzeichnet, daß** die Position des Bearbeitungszentrums (6) in dem Arbeitsraum (7) einstellbar ist.

9. Vorrichtung nach zumindest einem der vorangehenden Ansprüche, **dadurch gekennzeichnet, daß** der Arbeitsraum (7) zumindest abschnittsweise transparent ausgeführt ist.

## Claims

1. Apparatus (1) for machining a workpiece (2), having a machining centre (6), which is arranged in a working space (7) and in which the workpiece (2) is machined by means of a tool (3), the working space (7) being designed such that a gas stream (8) can flow through it in order to remove machining scrap and being equipped with a first cross-sectional area (11) and a second cross-sectional area (12), which is designed to be smaller than the first cross-sectional area (11) and is arranged downstream of the first cross-sectional area (11), as seen in the direction of flow of the gas stream (8), **characterized in that** the working space (7), as seen in the direction of flow of the gas stream (8), has a third cross-sectional area (14), which is arranged downstream of the second cross-sectional area (12) and is larger than the latter, and **in that** the machining centre (6) is arranged downstream of a narrowest cross-sectional area (13) of the working space (7).

2. Apparatus according to Claim 1, **characterized in that** the working space is provided with a means, the shape of which causes the gas stream to rotate about its flow axis.

3. Apparatus according to Claim 2, **characterized in that** the means has a flow-guiding element.

4. Apparatus according to at least one of the preceding claims, **characterized in that** the working space (7) has a working space wall with a shape which makes the gas stream (8) rotate about its flow axis.

5. Apparatus according to at least one of the preceding claims, **characterized in that** the working space has a feed device (9) or a discharge device (10) for supplying or discharging a gas, it being possible for the gas to be fed into or discharged from the working space at least partially tangentially, so that the gas stream (8) can be set in rotation about its flow axis.

6. Apparatus according to Claim 5, **characterized in that** the feed device (9) or the discharge device (10) is assigned a filter element.

7. Apparatus according to at least one of the preceding claims, **characterized in that** the working space (7) is shaped substantially in the form of a Laval nozzle.

8. Apparatus according to at least one of the preceding claims, **characterized in that** the position of the machining centre (6) in the working space (7) is adjustable.

9. Apparatus according to at least one of the preceding claims, **characterized in that** at least parts of the working space (7) are designed to be transparent.

## Revendications

1. Dispositif (1) d'usinage d'une pièce (2) à l'aide d'un centre d'usinage (6) installé dans un espace de travail (7) dans lequel on usine la pièce (2) à l'aide d'un outil (3),
l'espace de travail (7) étant parcouru par une veine de gaz (8) pour enlever les résidus de l'usinage et comportant une première surface de section (11) et une seconde surface de section (12), cette dernière étant plus petite que la première surface de section (11) et elle se trouve en aval de la première surface de section (11) dans le sens de passage de la veine de gaz (8),
**caractérisé en ce que**
l'espace de travail (7) comporte dans le sens de l'écoulement de la veine de gaz (8), une troisième surface de section (14) située en aval de la seconde surface de section (12) et plus grande que celle-ci et
le centre d'usinage (6) se trouve derrière la surface de section (13) la plus étroite de l'espace de travail (7).

2. Dispositif selon la revendication 1,
**caractérisé en ce que**
l'espace de travail comporte un moyen dont la forme engendre une rotation dans la veine de gaz autour de son axe d'écoulement.

3. Dispositif selon la revendication 2,
**caractérisé en ce que**
le moyen est un élément de guidage d'écoulement.

4. Dispositif selon au moins l'une des revendications précédentes,
**caractérisé en ce que**
l'espace de travail (7) comporte une paroi d'espace de travail ayant une forme mettant la veine de gaz (8) en rotation autour de son axe d'écoulement.

5. Dispositif selon au moins l'une des revendications précédentes,
**caractérisé en ce que**
l'espace de travail comporte une installation d'alimentation (9) ou une installation d'évacuation (10) pour alimenter ou évacuer un gaz,
le gaz arrivant au moins en partie tangentiellement dans l'espace de travail ou quittant celui-ci tangentiellement de façon que la veine de gaz (8) soit mise en rotation autour de son axe d'écoulement.

6. Dispositif selon la revendication 5,
**caractérisé en ce que**
l'installation d'alimentation (9) ou l'installation d'évacuation (10) comporte un élément de filtre.

7. Dispositif selon au moins l'une des revendications précédentes,
**caractérisé en ce que**
l'espace de travail (7) a pratiquement une forme correspondant à une tuyère de Laval.

8. Dispositif selon au moins l'une des revendications précédentes,
**caractérisé en ce que**
la position du centre d'usinage (6) est réglable dans l'espace de travail (7).

9. Dispositif selon au moins l'une des revendications précédentes,
**caractérisé en ce que**
l'espace de travail (7) est au moins en partie transparent.
